# EUROPEAN PATENT APPLICATION

(11) **EP 1 662 405 A1**
(43) Date of publication of application: **31.05.2006**
(21) Application number: 04292833.3
(22) Date of filing: 30.11.2004
(51) Int. Cl.: G06F 17/30

(54) **Method of displaying data on a client computer**

(71) Applicant: ALCATEL, 75008 Paris (FR)
(72) Inventor: Baccou, Serge, 67900 Osthofen (FR); Cordebard, Mathieu, 67114 Eschau (FR)
(74) Representative: LOUIS, PÖHLAU, LOHRENTZ

(57) **Abstract**

The invention concerns a method of displaying data on a client computer (4) as well as a client computer (4) and computer executable software code for data display on the client computer (4). The client computer retrieves a web page (32) containing statical data of a graphical user interface and at least one inclusion for including the dynamic data of the web page, wherein said inclusion points to a program located at a network server (2) and adapted to output a script (61). The client computer stores the web page (32) in a cache memory (43). The script that contains dynamic data generated by the program is transferred from the network server (2) to the client computer (4). A browser (42) of the client computer (4) includes the dynamic part into the static part of the web page (32) by means of the dynamic data included in the retrieved script (61).

## Description

The present invention relates to a method of displaying data on a client computer, a computer executable software code for data display on a client computer and a client computer.

Web servers on the Internet provide web sites that have graphical web pages, typically encoded in hyper text mark-up language (= HTML), which are accessible to client computers that are in connection with the Internet or linked with the web server via a local network, e.g. a LAN (= Local Area Network). A client computer uses a browser that allows the user to download the web page and display the web page on the client computer.

Web based user interfaces are often slow. This is all the more true as the internet connection between the web server and the client computer is small (for example 64 kB/s), the number of users is big or huge, the server that delivers the page is fitted with few memory and/or CPU resources or the client device is small, for example is a PDA (= Personal Digital Assistant), business phone, mobile or smart phone.

To speed up the response time of a web-based user interface it is known to use cache techniques on the client side (browsers cache) or on intermediate proxies (proxies between the client and the server). But, the cache will only accelerate the download of page when the same pages already been loaded.

The web page can have static data that remained unchanged and dynamic data which changes on the web page.

For example, JSP pages (JSP = Java Server Pages) opens the possibility to separate the dynamic part of a web page from the static HTML. You simply write the regular HTML in the normal manner and encloses the code for the dynamic in specific tags. Although what you write often looks more like a regular HTML file than a servlet, behind the scenes, the JSP page just gets converted to a normal servlet. That is normally done the first time the page is requested. The servlet outputs the static HTML associated with the servlets service methods. Such page is not always the same so that you cannot cache it neither on the client side nor on a proxy. With the JSP technology, the JSP pages cannot be cached and the pages are analysed by the servlet container which takes time and resources on the server. The problem is the same with other kind of dynamic pages such as ASP, PHP or SSI pages (ASP = Active Server Page; PHP = Hypertext Preprocessor; SSI = Server Side Includes).

When a web page contains dynamic data the web page must periodically be refreshed or reloaded to accurately reflect any changed data. The browser must constantly download the web page data and updates the already downloaded web page. Some browsers attend to increase efficiency through the use of a caching scheme to store the HTML web page when the web page is downloaded to the browser. When the web page has to be refreshed, the browser downloads the entire web page again, accepts the files used in the web page that are already in the cache. A conventional browser simply reloads the entire web page if the dynamic data is requested to be refreshed, but this total reload is slow and takes significant system resources. According to another method of refreshing the web page on the browser is to include a refreshment applet in the web page that instructs the browser to update the web page at a predetermined time interval.

However, both of these methods do not discriminate between static and dynamic data of the web site for purpose of updating the web page downloaded onto the browser.

It is an object of the present invention to accelerate the response time of a web-based interface.

The object of the present invention is achieved by a method of displaying data on a client computer, the method comprises the steps of: sending from a web server to the client computer web page, in particular a HTML page, the web page containing statical data of a graphical user interface and at least one inclusion for including the dynamic part of the web page, wherein said inclusion points to a program located at a network server and adapted to output a script; storing the web page in a cache memory of the client computer; transferring the script from the network server to the client computer, the script containing dynamic data generated by the program; including the dynamic part into the static part of the web page by means of the dynamic data; and displaying the web page by means of a browser executed at the client computer. The object of the present invention is further solved by computer executable software code for data display on a client computer, the code comprising: code to be sent from a web server to a client computer, the code specifying a web page, in particular a HTML page, and wherein the web page contains statical data of a graphical user interface and at least one inclusion for including the dynamic part of the web page, wherein said inclusion points to a program located at a network server and adapted to output a script; and code for including the dynamic part into the static part of the web page by means of dynamic data generated by the program and transferred via the script from the network server to the client computer. The object of the present invention is further achieved by a client computer comprising a communication unit for retrieving web pages from a web server; a memory for holding a web page, in particular a HTML page, the web page containing statical data of a graphical user interface and at least one inclusion for including the dynamic part of the web page, wherein said inclusion points to a program located at a network server and adapted to output a script, the script containing dynamic data generated by the program; and a browser adapted to store the web page retrieved from the web server in a cache memory, to include the dynamic part into the static part of the web page by means of said dynamic data transferred via the script, and to display the web page.

The invention makes it possible to completely separate the static part, i.e. the static GUI (= Graphical User Interface), from the dynamic part (the dynamic data) and allows the use of classical cache techniques at the maximum to decrease the amount of data to be transferred between client and server. It also increases the speed feeling at a user experience point of view.

In a typical database-driven/data focused web page applications on the Internet, 50 to 90 % of the web page content is static information. Combined with the advantage to use the classical cache techniques at the maximum the time response benefits achieved by the invention is between 35 % and 75 %. The invention improves the response time, use of cache and enables a separation between static GUI and dynamic data and thereby introduces a decision model where the work can be done by different developers.

Further, the invention makes it possible to host static data and dynamic data of a graphical user interface at different servers in the internet. Preferably, the static data, namely the HTML web page, and the dynamic data, namely the server side program, e.g. a servlet, handled by different kinds of server infrastructure adapted to the specific needs of respective data. For example, the HTML web page is hosted by various geographical distributed servers of a web service infrastructure and the servlets are hosted by a dedicated application server. Such approach improves speed and reliability of the system.

Further advantages are achieved by the embodiments of the invention indicated by the dependent claims.

The inclusion is done with a standard inclusion, for example a standard javascript inclusion, but the URL (= Universal Resource Locator) is not a javascript file but a program (ASP, JSP, PHP, servlet, C/C++ program or a program in any language) that outputs a script on its standard output.

Preferably, the web page is a HTML page specifying the statical part of the graphical user interface (= GUI) and having a set of javascript inclusions. The HTML page encodes a graphical user interface which is composed of widgets, text, dynamic behavior (functions that says "if... then we will disable this button"). If the GUI is well designed, it can be completely independent to the data set that is passed to this GUI. Therefore, we can say that the GUI is "static". The dynamic data is composed of information that will instantiate the GUI to fill the fields. An inclusion mechanism based on the javascript inclusions of the web page includes the dynamic part into the static part without disturbing the cache (proxy or client-side) mechanisms.

According to a preferred embodiment of the invention, the client computer executes an automatic data fill mechanism that automatically uses the data provided by the inclusions to fill the fields. The web page downloaded on the client computer contains a script adapted to execute such an automatic filling procedure. The client computer uses this automatic data filling procedures to fill web page fields, i.e. HTML fields with correspondent dynamic data provided by the inclusion.

The dynamic part can be summarized as a variable valuation, e.g. a set of javascript variables. Preferably, there is a naming convention that HTML form fields are named with the same names as these javascript variables. The network server includes one or more javascript variables representing dynamic data in the javascript. The client computer automatically fills HTML form fields having the same name as these javascript variables with correspondent javascript variables contained in the retrieved script. Such procedure provides a powerful mechanism to include the dynamic part into the static part without disturbing the cache mechanisms.

According to a preferred embodiment of the invention, the client computer executes a function that reads the current query string, calculates file path with the retrieved query string and dynamically constructs with the result of the concatenation the inclusion for including the dynamic part of the web page.

This approach solves the query string issue problem. For example, you want to describe a GUI that lists users. To gain access to the 5^{th} user the URL (URL = Universal Resource Locator) will be:
http://myServer/user.html?id=5

Lets consider that getUser is the program that provides the data for a given user. The user.html file is a static HTML file that includes a javascript inclusion for dynamic data using the following instruction:
<script language="javascript" src="/servlets/getUser"></script>

The problem here is that the getUser program does not know which user to display. We have to tell the getUser program that we want the data of the 5^{th} user. In other words, we want the original query string (everything after the "?" character in the original URL) to be communicated to the program called in javascript. This has to be done by the use of a javascript function called insertJSFile ( ) instead of the use of the <script> tag as shown in the following example:
<script>insertJSFile ("/servlets/getUser");</script>

The insertJSFile (filePath) function reads the current query string, concatenates the filePath wit the retrieved query string and writes the <script> tag with the results of the concatenation.

For our example, the function will dynamically construct the following tag:
<script language ="javascript" src="/servlets/getUser?id=5"></script>

According to a further preferred embodiment of the invention, the client computer executes at the client computer a function that automatically generates a random number and adds it to the query string of the inclusion. Such approach prevents the caching of the script output of the program. Some browsers will not behave correctly when using the <script> tag with reference to a program. For example, Internet Explorer will cache the javascript output of the program which is a waste of memory space as it is dynamic data that have not to be cached. Since dynamic data are cached, the browser will always return the same data (the information that are in the cache) even if the data has changed. The function automatically generates a randomized number and adds it at the end of the query string so that the browser will never be able to cache the dynamic data since the browser uses the complete URL with the query string to identify files to cache.

According to a preferred embodiment of the invention, the client computer performs background pre-loading of the next files. The client computer executes a background pre-loading mechanism of files potentially needed afterwards. The pre-loading mechanism selects, downloads and stores potentially needed files in the cache memory of the client computer. With such background pre-loading, the user experience is a really small response time even with a low bandwidth. When a page is loaded, the user usually has to think a little, then has to perform something using his input devices (keyboard, mouse, PDA pen...). The thinking time and the use of the keyboard, the mouse or any input device by the user is used to download in background the next possible files to be used by the user. Preferably, the pre-load is done in background using a hidden frame so that the user will not see the page before needed. Preferably, the web page downloaded from the web server has a script for a hidden frame, the script is adapted to execute a web page specific pre-loading mechanism, and the client computer executes this web page specific pre-loading mechanism in background within the hidden frame on the browser.

Preferably, the next files will be pre-loaded with the following algorithm:
A graph is established that indicates potentially needed successive web pages, wherein the graph represents the probability to go on these pages. A walking procedure walks the graph with preference on the branches with the highest probability. The walking procedure selects a number of web pages. On the hidden frame, each selected web page is downloaded in background. During download the associated files (e.g. images CSS = Cascading Style Sheet, javascripts) are also downloaded automatically by using the hyperlink reference in the web page. All the files are put in the browser cache so that when the user passes a successive page everything static will be downloaded from the cache even if the user sees this page for the first time. Only dynamic data will be downloaded on the network.

These as well as other features and advantages of the invention will be better appreciated by reading the following detailed description of presently preferred exemplary embodiments taken in conjunction with accompanying drawings of which:
- Fig. 1: is a block diagram of servers and a client computer interconnected through a communication network, the block diagram illustrating a first access to a web page.
- Fig. 2: is a block diagram of the servers and the client computer according to Fig. 1, wherein the block diagram illustrates a second access on the web page.
- Fig. 3: is a functional view exemplifying the execution of the method according to the present invention.

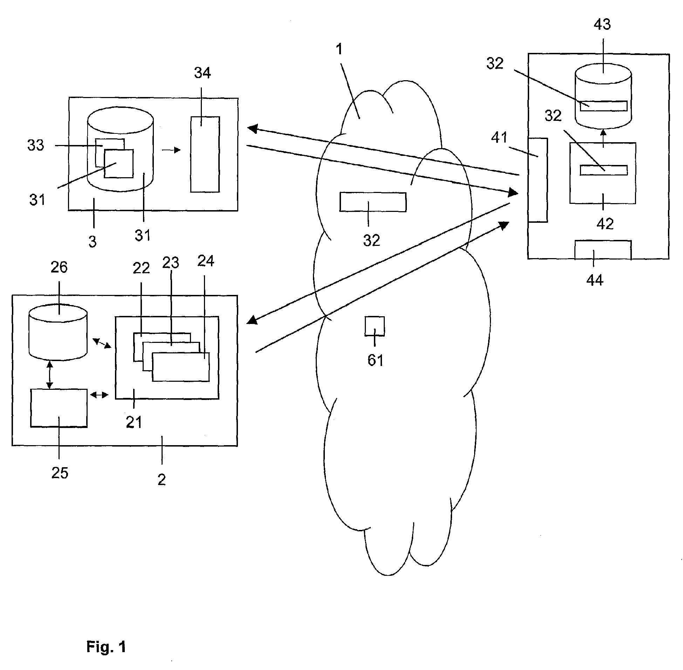

Fig. 1 shows a communication network 1, two servers 2 and 3 and a client computer 4.

The communication network 1 is a data network using an IP-protocol (IP = Internet Protocol) as common level 3 communication layer. The communication network 1 may be constituted of various different physical networks, e.g. ATM-networks, MPLS-networks or Ethernet networks (ATM = Asynchroune Transfer Mode; MPLS = Multi Protocol Label Switching). Further, it is possible that the client computer 4 is connected via a wireless access network, e.g. a GSM-network, a UMTS-network or a WLAN-network (GSM = Global System for Mobile Communication; UMTS = Universal Mobile Telecommunications System) with the servers 2 and 3.

Preferably, the communication network 1 is the Internet.

The server 3 is a web server providing web pages within the communication network 1. From functional point of view, the server 3 has a database 31 for storing a plurality of web pages, for example web pages 32 and 33, and a control unit 34 adapted to download such web pages to requesting client computers.

Preferably, the server 3 represents a server infrastructure with various locally distributed web servers providing the content of the web pages stored in the database 31 within a respective dedicated area, i.e. the URL (= Uniform Resource Locator) of the respective web pages are mapped to different web servers dependent on the location of the client computer that retrieves the respective web page. Such service system speeds up the download of the web pages hosted by the server 3.

The server 2 is a network server serving a specific web-based application, for example an internet payment service. From functional point of view, the server 2 comprises a container 21 of programs providing the dynamic data of the web-based application, a database 26 and, optionally, a set of further programs 25 providing services to the programs of the container 21. The programs of the container 21 are encoded as ASP, JSP, PHP, servlet, C/C++ program or program in any other language (ASP = Active Server Page; JSP = Java Server Page; PHP = PHP Hypertext Preprocessor). These programs are addressed and accessible via an allocated URL through the communication network 1. The programs output as standard output a script that contains dynamic data of the web based application. The programs of the container 21 accesses the data source provided by the database 26 and the services of the programs 25 to generate the dynamic data of the web based application. Further, it is possible that the programs of the container 21 are a set of proxy objects, for example java-beans, interfacing a service logic provided by the programs 25.

Preferably, the container 21 is a servlet container and the programs of the container 21 are java servlets.

Further, it is possible that the functionalities of the servers 2 and 3 provided by the same physical server or service infrastructure, i.e. the web pages and the programs of the container 21 are hosted by the same server.

The client computer 4 is a personal computer, a PDA (= Personal Digital Assistant), or a phone, for example a smart phone or any other kind of enhanced cellular phone.

The client computer 4 is constituted of an electronic circuit with at least one microprocessor and a data storage, software code executed by the at least one microprocessor, a communication device for communicating through the communication network 1 and various input/output devices, for example a liquid crystal display, a keypad, a microphone, a loudspeaker or a mousepad. The functionalities of the client computer 4 are performed by the execution of software code based on the hardware platform provided by the components of the client computer 4. From functional point of view, the client computer 4 comprises a communication unit 41, a cache memory 43, a browser 42 and an output unit 44.

The communication unit 41 comprises the physical and logical components of the client computer 4 that are necessary to communicate through the communication network 1. For example, the communication unit 41 contains the necessary functionalities to process the TCP/IP protocol stack (TCP = Transaction Control Protocol, IP = Internet Protocol). The browser 4 is a standard browser application, e.g. Internet Explorer. The output unit 44 represents the output devices used by the browser 42, for example a liquid crystal display or monitor and a loudspeaker.

When creating a web based application, the user interface in encoded in two separate artifacts:
At first a static graphical user interface (GUI) which consists of a set of web pages composed of widgets, texts, dynamic behavior (function that says for example "if...then we will disable this button"). For example, the web pages 32 and 33 specify the statical part of the GUI.
Secondly, the dynamic part that is composed of dynamic data used to instantiate the GUI. The dynamic part is encoded through the programs of the container 21, for example through programs 22, 23 and 24.

The web pages 32 and 33 are encoded as standard HTML pages that can be cached by the browser 42. These HTML pages contain inclusions, i.e. functions that load files in the web page, which are used to include the dynamic part of the web page. The URL of the inclusion is not a file but one of the programs 22 to 24 that outputs a script on its standard output. Preferably, the inclusions are standard javascript inclusions but the URL is not a javascript file but one of the programs 22 to 24. For example, the web page 32 has following inclusion instruction:
<script language="javascript" src="/servlets/myServlet"></script>

In this example the program "myServlet" will display the following javascript instructions:

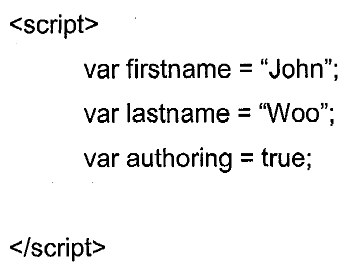

At the first time the user requests the web page 32, the browser 42 sends a correspondent request message through the communication network 1. The request message that is routed to the web server 3. The web server 3 downloads the requested web page 32, which is, for example, a DHTML page (DHTML = Dynamic Hypertext Mark-up language), through the communication network 1 to the browser 42. As already exemplified, the web page 32 contains statical data of the graphical user interface and at least one inclusion for including the dynamic part of the web page. The at least one inclusion points to a program located at the network server 2 and adapted to output a script. The browser 42 stores the web page 32 in the cache memory 32. Further, it executes the inclusions of the web page 32, contacts the correspondent programs 22 to 24 of the server 2 and retrieves scripts from these programs that contain the dynamic data to be included in the web page 32. For example, the browser 42 retrieves a javascript 61 containing the above-specified output of the program "myServlet". Now, the static part of the web page has to make use of the dynamic part and the browser has to include received dynamic data into the web page 32. This is done by a mechanism called "automatic data fill". This mechanism automatically fills the dynamic data contained in the retrieved scripts in the corresponding HTML form fields, for example, textInput, checkboxes, droplists,.... For example, the values "firstname", "lastname" and "authoring" of the script 61 are filled in the corresponding HTML form fields of the web page 32.

Preferably, there is a name convention that the HTML form fields of the web pages 32 and 33 will be named with the same names as the javascript variables outputted by the programs 22, 23 and 24. A generic code is stored in a javascript library included in all files of the web pages 32 and 33. This generic code is used to automatically fill the javascript variables of the retrieved scripts in the suitable fields of the web pages 32 and 33. During this download of the web page 32, the associated files (images CSS, javascripts,...) are also automatically downloaded (from the server 3) and stored in the cache memory 43 by using the hyperlink references in the web page 32.

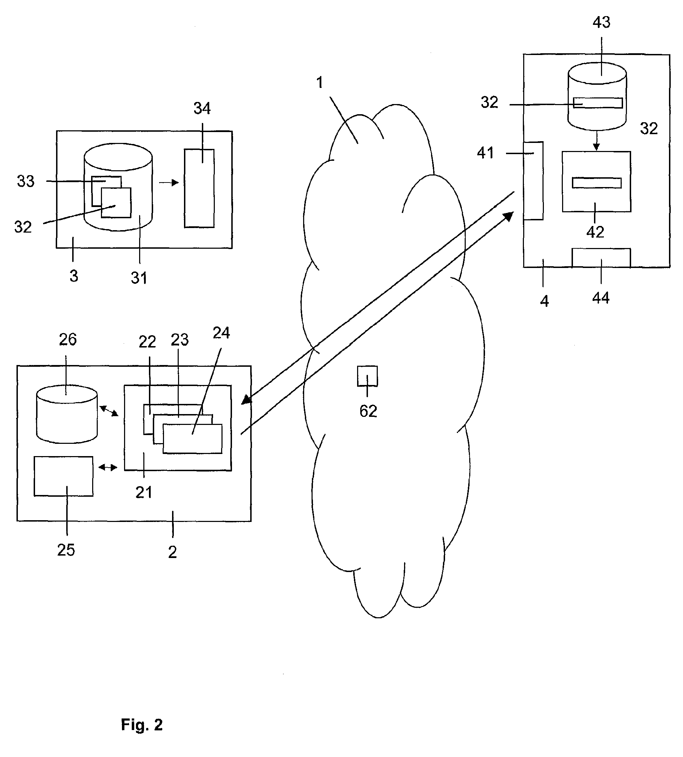

At a second request of the web page 32, everything static is already locally available and downloaded from the cache memory 43. Only dynamic data has to be downloaded through the communication network 1. This is in the following exemplified by hand of Fig. 2.

Fig. 2 shows the communication network 1, the servers 2 and 3 and the client computer 4. The web page 32 and their associated files are stored in the cache memory 43 of the client computer 4. When the user or a refreshing function of the client computer 4 requests access to the web page 32, the web page 32 and its associated files are automatically downloaded from the cache memory 43 to the browser 42. As soon as the browser processes an inclusion of the web page 32 directed to a program of the server 2, the browser contacts this program and retrieves a script, for example the script 62 that contains the updated dynamic data to be included in the static GUI.

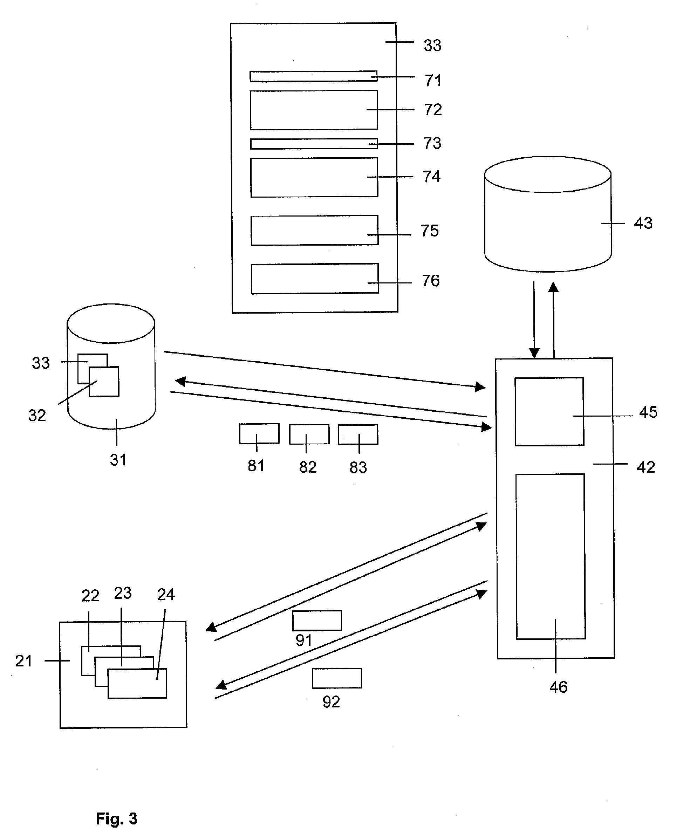

In the following further details of the invention are exemplified by hand of Fig. 3.

Fig. 3 shows the database 31 with the web pages 32 and 33, the browser 42, the cache memory 43 and the container 21 with the programs 22, 23 and 24.

At the first time the user requests the web page 33, the server 3 downloads the web page 33 to the browser 42. The web page 33 is a DHTML page having a plurality of HTML tags specifying static data and inclusions pointing to programs of the container 21. For example, the web page 33 contains tags 72 and 74 containing such static data and inclusions 71 and 73 pointing to programs of the container 21.

Further, the web page 33 contains a script 73 having program code for automatically filling the HTML fields of the tags 72 and 74 with the dynamic data provided by the inclusions 71 and 73 when executed by the browser 42.

Further, the web page 33 contains a script 76 for a hidden frame in the web page 33. The script 76 contains data and code for a web page specific pre-loading mechanism that selects, downloads and stores potentially needed files in the cache memory 43 of the client computer 4 when executed by the browser 42.

Consequently, the web page 33 contains codes specifying statical data of the graphical user interface, namely the text 72 and 74, inclusion 71 and 73 for including the dynamic part of the web page and code, namely the script 75, for including the dynamic part into the static part of the web page by means of dynamic data generated by the programs 22 to 24 and transferred via scripts from the network server 2 to the client computer 4.

The first time the web page 33 is downloaded to the browser 42, the browser 42 stores the web page 33 and the associated files included by hyperlink references in the web page 33 in the cache memory 43. Further, the browser executes in background within a hidden frame 45 the pre-loading mechanism specified in the script 76. The pre-loading mechanism pre-loads files potentially needed afterwards. Possible next pages are put in a graph wherein the probability to go on this page is associated with each branch of this graph. A walking procedure walks the graph with a preference on the branches with the highest probability. For example, the next page after a sign-in page is at 90 % the homepage and at 10 % and error page. Further, it is possible that a user specific profile specifying user preferences is used to establish or modify the graph. Further, user inputs or other kind of external data are optionally respected by the walking procedure and influence the selection done by the background pre-loading mechanism.

The pre-load is done in background within the hidden frame 45. Each web page selected by the walking procedure is downloaded in background and thereby automatically stored within the cache memory 43. For example, web pages 81, 82 and 83 are downloaded and stored in the cache memory 43. During download the associated files (images, CSS and javascripts) included in the selected web pages through hyperlink references are also automatically downloaded and stored within the cache memory 43. As all or the most relevant part of potentially needed text files are already stored in the cache memory, there is a high probability that when the user will click on gain access to the next page, everything static may be downloaded from the cache, even if the user sees this page for the first time.

Within a visible frame 46 the browser 42 executes, when displaying the web page 33, the inclusions 71 and 73 of the web page 33, contact associated programs of the container 21 and retrieves scripts 91 and 92 containing the dynamic data of the GUI that has to be included in the static part of the GUI. The script 75 of the web page 33 provides a generic code that automatically fills the dynamic data included in the scripts 91 and 92 in the suitable HTML form fields of the tags 72 and 74.

Preferably, the script 75 contains code of an additional function that reads the current query string, concatenates a file path with the retrieved query string and dynamically constructs with the result of the concatenation the inclusion for including the dynamic part of the web page. Preferably, this function will further automatically generate a randomized number and add it to the query string so that the browser 42 will not cache the dynamic data.

For example, if you want to describe a GUI that lists users, you gain access to the 5^{th} user and the getUser will be the program that provides the data for given users, the insertJSFile ( ) function will construct for "/servlets/getUser" the following HTML instruction:
<script language ="javascript"
src="/servlets/getUser?id=5&rand=345101615109701"></script>.

This HTML instruction created by the function insertJSFile ( ) when executed by the browser 42 tells the getUser program that we want the data of the 5^{th} user and contains a random number used to prevent the caching of the dynamic data.

## Claims

1. A method of displaying data on a client computer (4), the method comprises the steps of:
sending from a web-server (3) to the client computer (4) a web page (32, 33), in particular a HTML page, the web page (32, 33) containing statical data of a graphical user interface and at least one inclusion (71, 73) for including the dynamic part of the web page (5, 7), wherein said inclusion (71, 73) points to a program (22 to 24) located at a network server (2) and adapted to output a script (61, 62, 91, 92);
storing the web page (32, 33) in a cache memory (43) of the client computer (4);
transferring the script (61, 62, 91, 92) from the network server (2) to the client computer (4), the script (61, 62, 91, 92) containing dynamic data generated by the program (22, 23, 24);
including the dynamic part into the static part of the web page (32, 33) by means of said dynamic data; and
displaying the web page by means of a browser (42) executed at the client computer (4).

2. The method of claim 1,
**characterized in**
**that** the client computer (4) executes a background pre-loading mechanism of files (81, 82, 83) potentially needed afterwards, wherein the pre-loading mechanism selects, downloads and stores potentially needed files in a cache memory (43) of the client computer (4).

3. The method of claim 2,
**characterized in**
**that** the method comprises the further steps of establishing a graph indicating potentially needed successive web pages, the graph representing the probability to go on this pages; walking the graph with a preference on the branches with the highest probability; and pre-loading associated files of web pages selected at the walking procedure.

4. The method of claim 2 or claim 3,
**characterized in**
**that** the method further comprises the steps of including a script (75) for a hidden frame (45) in the web page (33), the script (75) is adapted to execute a web page specific pre-loading mechanism; downloading and caching the web page (33) with the script (75); and executing the pre-loading mechanism in background within the hidden frame (45) on the browser (42).

5. The method of claim 1,
**characterized in**
**that** the method further comprises the steps of including a script (75) in the web page (32, 33), the script is adapted to execute the automatic filling procedure; and filling, by the automatic filling procedure, web page fields with correspondent dynamic data provided by the inclusion.

6. The method of claim 1,
**characterized in**
**that** the method further comprises the steps of including, at the network server (2) one or more javascript variables representing dynamic data in the script (61, 62, 91, 92); naming HTML form fields of the web page (32, 33) with the same name as the Java script variables; and automatically filling, at the client computer (4), HTML form fileds with correspondent javascript variables contained in the retrieved script (61, 62, 91, 92).

7. The method of claim 1,
**characterized in**
**that** the client computer (4) executes a function that reads the current query string, concatenates a file path with the retrieved query string, and dynamically constructs with the result of the concatenation an inclusion for including dynamic part of the web page (5, 7).

8. The method of claim 1,
**characterized in**
**that** the client computer (4) executes a function that automatically generates a random number and adds the random number to the query string of the inclusion.

9. Computer executable software code (32, 33) for data display on a client computer (4), the code comprising: code to be sent form a web server (3) to a client computer (4), the code specifying a web page, in particular a HTML page wherein the web page contains statical data of a graphical user interface and at least one inclusion (71, 73) for including the dynamic part of the page, wherein said inclusion points to program (22 to 24) located at a network server (2) and adapted to output a script (61, 62, 91, 92); and code (75) for including the dynamic part into the static part of the web page by means of dynamic data generated by the program (22, 23, 24) and transferred via the script (61, 62, 91, 92) from the network server (2) to the client computer (4).

10. A client computer (4) comprising a communication unit (41) for retrieving web pages from a web server (3); a memory for holding a web page (32, 33), in particular a HTML page, the web page containing statical data of a graphical user interface and at least one inclusion (71, 73) for including the dynamic part of the web page, wherein said inclusion points to a program (22, 23, 24) located at a network server (2) and adapted to output a script (61, 62, 91, 92), the script containing dynamic data generated by the program (22, 23, 24); and a browser (42) adapted to store the web page (32, 33) retrieved from the web server (3) in a cache memory (43), to include the dynamic part into the static part of the web page by means of said dynamic data transferred via the script (61, 62, 91, 92), and to display the web page.
